# EUROPEAN PATENT SPECIFICATION

(11) **EP 3 405 306 B1**
(45) Date of publication and mention of the grant of the patent: **13.10.2021**
(21) Application number: 17702543.4
(22) Date of filing: 19.01.2017
(51) Int. Cl.: B23K 26/0622, B23K 26/067, B23K 26/08, B23K 26/352, B23K 101/16, B23K 103/04

(54) **LASER TEXTURING OF STEEL STRIP**
LASERSTRUKTURIERUNG VON STAHLBÄNDERN
TEXTURATION AU LASER D'UNE BANDE D'ACIER

(30) Priority: 22.01.2016 EP 16152436; 30.05.2016 EP 16172035
(43) Date of publication of application: 28.11.2018
(73) Proprietor: Tata Steel Nederland Technology B.V., 1951 JZ Velsen-Noord (NL)
(72) Inventor: MATTHEWS, David Thomas Allan, 1970 CA IJmuiden (NL); MUSTAFA, Hasib, 7521 JC Enschede (NL); RÖMER, Gerardus Richardus Bernardus Engelina, 7041 TD 's-Heerenberg (NL); WENTINK, Derk Jan, 1970 CA IJmuiden (NL)
(74) Representative: Group Intellectual Property Services
(86) International application number: PCT/EP2017/051089
(87) International publication number: WO 2017/125497

(56) References cited:
- EP-A1- 0 140 663
- EP-A1- 2 463 068
- US-A1- 2014 212 682
- US-B2- 7 516 637
- US-B2- 7 903 336

## Description

### Field of the invention

The invention relates to laser texturing of steel strip and to an apparatus and a configuration for laser texturing steel strip.

### Background of the invention

In the finishing of (coated) steel strip, a steel strip is subjected to levelling and/or temper rolling. With levelling the shape and form of the strip are controlled and with temper rolling the mechanical properties of the steel strip are improved by lengthening of the strip and by orientation of the grains in the steel in the rolling direction. Also the surface quality of the strip is improved as far as it concerns appearance, surface texture and surface function(ality). With the temper rolling step a texture may be transferred to the surface of the strip from the work rolls to get a certain function, such as, but not limited to, appearance, a better adhesion of paint, tribological properties and improved forming properties of the steel strip. The texturing of the steel strip is done to the requirements of the end user, for instance end users in the automotive industry.

To apply a texture to a steel strip at least one of the temper work rolls in contact with the steel strip, is provided with a certain texture on the roll surface, such that an impression of which is transferred to the surface of the steel strip when passing through the temper mill. Since the texture on the texture transfer roll wears out, and/or becomes fouled, the required texture has to be renewed or applied again frequently. For the texturing of the texture transfer roll surface, various techniques are available but even with the more durable applied textures the major drawback is that they all have a certain but limited stand time. This has become an even larger drawback with the increasing application of high strength steels over a wide product range.

Another drawback is that for the application of different textures the texture transfer roll has to be changed resulting in time and hence production losses. Additionally, if different textures are required on the strip on different locations, either within the roll width, outside the length of the roll circumference, or on the top or bottom of the steel strip this cannot be achieved with conventional single stand rolling mills.

US 7 516 637 B2, which forms the basis for the preamble of claims 1 and 13, discloses a method of texturing a metal sheet or strip, which method comprises a plurality of sequential texturing passes each of which is performed by passing the sheet or strip between at least one pair of rollers, wherein at least one of each pair of rollers has a textured pattern on the surface thereof and the textured patterns are transferred to the sheet or strip during each texturing pass, and wherein the textured surface on the sheet or strip resulting from each pass overlaps with that from the one or more other passes to form a final textured pattern.

EP 2 463 068 A1 discloses a method of manufacturing a blade that includes providing a coil of strip carbon steel material having a surface thereon to be marked; forming a colored oxide layer on the surface of the material; and selectively removing portions of the colored oxide layer to reveal underlying carbon steel material so as to form indicia on the surface of the material by virtue of a color contrast between the colored oxide layer and the revealed carbon steel material.

### Objectives of the invention

It is an objective of the present invention to provide a method and apparatus for texturing steel strip wherein the texturing is done separately from the temper rolling of the steel strip.

It is another objective of the present invention to provide a method and apparatus for texturing steel strip wherein the texturing is done without a direct mechanical contact with the steel strip.

It is another objective of the present invention to provide a method and apparatus for texturing steel strip wherein the applied texture can be changed without interruption of the rolling process.

It is another objective of the present invention to provide a method and apparatus for texturing steel strip wherein the texture can be changed over the width and the length of the strip.

It is another objective of the present invention to provide a method and apparatus for texturing steel strip wherein the texturing can be done at a wide range of rolling speeds.

It is still another objective of the present invention to provide a method and apparatus for texturing steel strip wherein the texturing can be done at less net costs in comparison with texturing according to the prior art.

### Description of the invention

According to a first aspect of the invention one or more of the objectives of the invention are realized by providing a method for finishing a steel strip according to claim 1.

In order to be able to apply a texture pattern on a moving steel a laser beam or laser beams are used which can either be pulsed laser beams or continuous wave laser beams which modify the strip steel surface. In case a pulsed laser source is used, pulse durations in the nano-, pico or femto-second regime are preferably used, to obtain well defined textures in the micrometer range without that the rest of the strip or the coating is thermally affected or at least not significantly thermally affected.

The term "steel strip" shall mean "steel strip" as well as "coated steel strip".

The strip surface is textured using a non contact method which in this case is by means of electromagnetic radiation, more specifically by laser. Instead of laser texturing also other energy beams could be used for texturing, in particular by means of electron- or ion beams. With texturing by means of electron- or ion beams a vacuum is needed to apply a texture which requires additional measures in comparison with the laser texturing method according to the invention.

A single laser beam is sufficient to apply a texture pattern on a moving steel strip, however if different texture patterns alongside of each other or when broad steel strips have to be provided with texture patterns it is advantageous to have more than a single laser beam available. To that end, it is provided that the laser beams are divided in groups each with a single laser beam or a plurality of laser beams, which groups are controlled separately. With multiple laser beams it will be possible and/or easier to control the laser beams to provide a broad strip with a texture pattern or where different texture patterns have to be applied next to each other on a moving steel strip.

According to a further aspect of the invention it is provided that the groups of laser beams are positioned over the width and/or direction of movement of the steel strip with respect to each other. By positioning the groups of laser beams over the width of the path of a moving steel strip the application of a texture pattern or patterns across the width can be controlled more easily. By positioning the groups of laser beams over the direction of movement of a moving steel strip the application of a texture pattern in successive steps can be controlled more easily. Such a texture pattern could for instance comprise successive texture types in line with each other. If the application of a texture patterns raises the temperature of the steel strip locally it could be advantageous to apply an adjacent part of the texture a little later to let the area around a part of an applied part of the texture on the steel strip first cool down. With such a setup the groups of a single or a plurality of laser beams could be positioned in line with each other with regard of the direction of movement of the steel strip.

This is not absolutely necessary and according to a further aspect of the invention it is provided that the groups of laser beams are controlled such that adjacent parts of the texture are applied with different groups of laser beams wherein the groups have different positions with respect to each other. Applying the texture pattern with more than one group of laser beams at an angle from another position can be done without great difficulty.

According to a further aspect of the invention a texture pattern is applied by controlling two or more groups of laser beams to form an interference pattern showing a power density distribution suitable for texturing of the moving steel strip. By using interference of laser beams to apply a texture pattern a large range of different patterns become available. For instance use can be made of laser beams that are fixed in one specific direction, such as perpendicular to the moving steel strip, which if necessary are only controlled in Z-direction, in combination with laser beams that are directed also in the X- and/or Y-direction. Another setup is to combine laser beams that are all controllable in all directions. Furthermore, continuous wave laser beams can be used in combination with pulsed laser beams or only continuous wave laser beams can be used. Furthermore, a protective and/or shroud gas may be used to avoid oxidation of the processed strip and/or remove and/or prevent debris material from interfering with the laser-material interaction zone of the processed strip. Alternatively, the shrouding gas may be applied to the laser-material interaction zone to chemically alter the processed surface.

According to a further aspect of the invention the control comprises the control of one or more of the laser beams and the position thereof within one or more of the different groups of laser beams. With such a control the possibilities to apply a texture pattern are further increased.

In order to control a single laser beam or a plurality of laser beams the control comprises the focussing of laser beams into image points on or near the surface of the moving steel strip, and/or modulation of the power of the laser beam or beams and/or, shaping or reshaping of the power density of the laser beam or beams.

The control further comprises a correction for changes in the Z-direction of the moving steel strip. Since a moving steel strip will inevitably deviate from the imaginary flat path through at least part of the rolling mill a correction of the laser beams in the Z-direction may be necessary. This can be achieved by for example mechanically changing the relative position of the focussing device to the moving steel strip and/or optically changing the diameter of the laser beam(s) entering the focussing device, for example by the use of a lens or a variable beam expander.

In the present invention, the texturing is carried out after temper rolling and/or levelling of the steel strip.

The method according to the invention is suitable to be used with a line speed of the steel strip is in a range up to and including 15m/s. By using fast and high peak power laser beams the method can be used by any of the rolling speeds used in the industry. However, the setup and control of the laser beam or laser beams in the method is such that a texture pattern can also be applied at lower speeds.

Where in the method a pulsed single laser beam or a plurality of pulsed laser beams are used it is provided that:
- the pulse duration is in the range of 1 fs to 100 ms,
- the electromagnetic radiation of each laser beam has a wave length between 200nm
- 11µm, and
- with an energy density of each laser beam in the range of 1nJ/cm² - 100 J/cm², preferably in the range of 0.1 J/cm² to 10 J/cm².

The energy density of each laser beam is as measured in the laser spot at the strip surface.

Preferably a pulse duration is used of less than 1ns, even more preferably less than 100ps.

These ranges comprise ultrafast and high peak power pulsed laser, i.e. lasers which are fast and powerful enough to apply a texture pattern on a moving steel strip at any speed used in the steel industry in the processing of steel strip. According to a further aspect of the invention the pulsed laser beam or beams used in the method have a pulse frequency in the range of 1Hz to 5GHz, wherein the frequency is dependent on the density of the texture, the size of the strip, and the velocity of the strip, and wherein the diameter of the laser beam on the surface of the strip is in the range of 10nm to 1mm.

Depending on the type of the texture that has to be applied the diameter of the laser beam on the surface of the strip may also be outside this range.

The invention further provides for an arrangement for the finishing of steel strip according to claim 13.

According to a further aspect of the invention the control means are designed to combine two or more laser beams to form an interference pattern with a power density distribution suitable for texturing of the moving steel strip. With such a setup the laser beams or part of the beams could be continuous wave laser beams, instead of pulsed laser beams.

The arrangement further comprises a laser beam splitter for one or more of the laser beam sources to split the laser beam from a laser beam source into a plurality of laser beams. In this way a plurality of laser beams or different groups of single laser beams and/or different groups with a plurality of laser beams can be obtained from a single laser beam source.

According to a further aspect the arrangement comprises a focusing element for each laser beam, or plurality of laser beams, to focus the laser beam or laser beams to one or more predetermined points. The control of the focussing element for the laser beams is a continuous control because of the inevitable variations of the moving steel strip in the Z-direction.

According to still a further aspect the arrangement comprises a beam expander and a laser beam shaper between laser beam source and related laser beam splitter or focusing elements, or between other optical elements. The arrangement further comprises at least one position controlled laser beam deflector is provided in the laser beam path, to deflect the laser beam in one or more directions. Such a laser beam deflector can consist of Galvano(meter)-scanner(s), piezo-scanner(s), Micro-Electro-Mechanical System (MEMS) scanner(s), rotating polygon wheel scanners, optical solid state deflectors, which rely on the electro-optical or acousto-optic effect, or the like, or a combination of these technologies.

According to a further aspect of the invention, the arrangement comprises a number of laser beam devices which are positioned over the width and in the length of the path of the steel strip through the arrangement. Such a laser beam device could be a laser beam source or a laser beam derived from one or more common laser beam sources.

The control means of the arrangement are designed to control the laser beam source and/or the beam expander, beam splitter, focusing element(s), beam shaper(s) and deflectors in the path of the laser beam coming from a laser beam source. The control means is largely a software regulated control system to control the devices in the laser texturing part of the arrangement and with the necessary sensors to monitor changes in the process and adapt the control to these changes and to a control programme for the texture pattern.

It is further provided that the arrangement comprises a temper roll mill and wherein the temper roll mill is provided with a roll with a roughness Ra (λc = 2.5mm) less than 6 µm and preferably less than 2 µm. Since the texturing is applied by means of laser texturing there is no longer need for the use of textured rolls. However, in order to have sufficient grip on the steel strip at least one of the rolls needs to have a certain roughness.

### Brief description of the drawings

The invention will be further explained on hand of the example shown in the drawing, in which:
- Fig.1: shows schematically a processing order of temper rolling, tension levelling, coating and laser texturing,
- Fig.2a-d: shows different arrangements to apply a laser texturing to a steel strip in more detail, and
- Fig.3: shows the typical surface results obtainable using laser texturing of a moving steel strip in more detail.

### Detailed description of the drawings

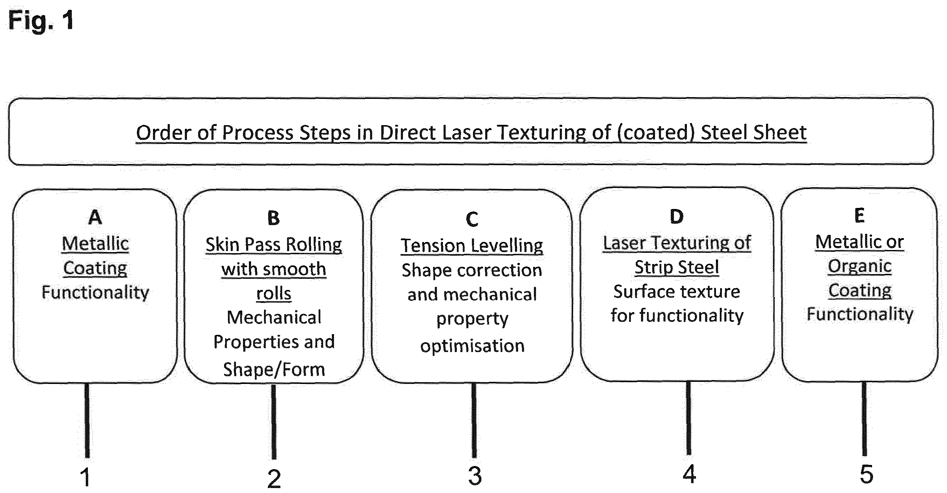

In Fig.1 a broad schematic is provided of the processing order. The processing starts with providing a steel strip, which in most cases will be provided with a coating such as a Zn-based coating as shown in block 1. After that the steel strip is subjected to a skin pass rolling, block 2, and to tension levelling, block 3, before a texture pattern is applied by means of laser texturing, block 4. After that, optionally a further metallic or organic coating could be applied to the textured steel strip, block 5. Of course, the laser texturing may also be conducted with or without the enveloping previous processing steps.

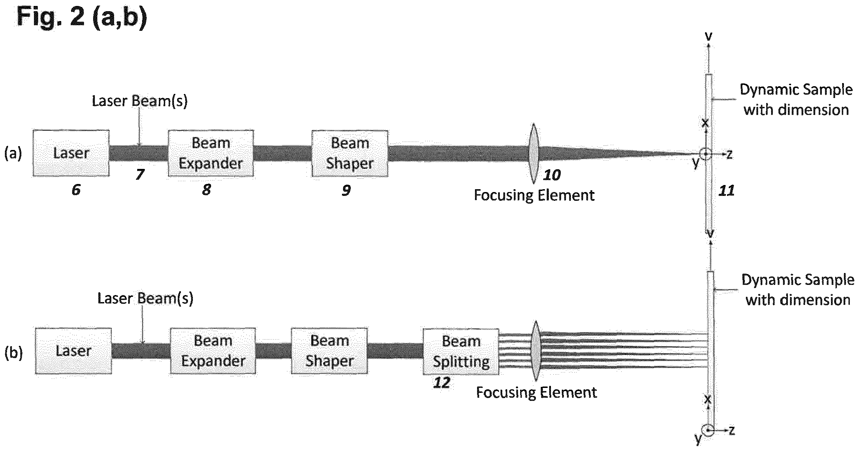

Fig.2a shows an arrangement with a laser source 6 which generates one or more laser beams 7, a beam expander 8, a beam shaper 9 and a focussing element 10 to focus the laser beam on a steel strip 11.

Fig.2b shows an arrangement which further comprises a beam splitter 12 to split the laser beam in a plurality of laser beams.

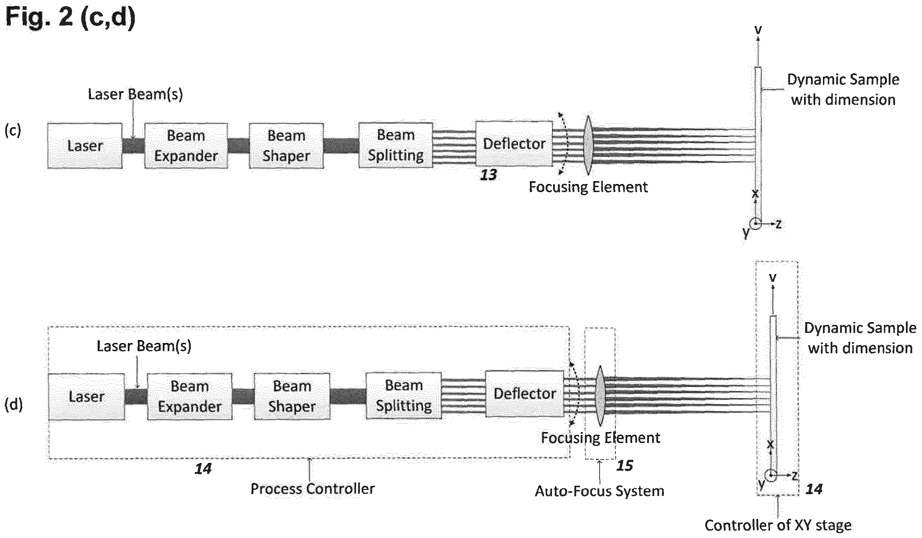

In the arrangement shown in Fig.2c a beam deflector 13 is included which is used to deflect the laser beam in one, two, or even three dimensions.

In Fig.2d control systems 14,15 for the arrangement are schematically indicated. Wherein control system is for the control of respectively laser source 6, beam expander 8, beam shaper 9, beam splitter 12 and beam deflector 13. Control system 15 is specifically for the control of focussing element 11.

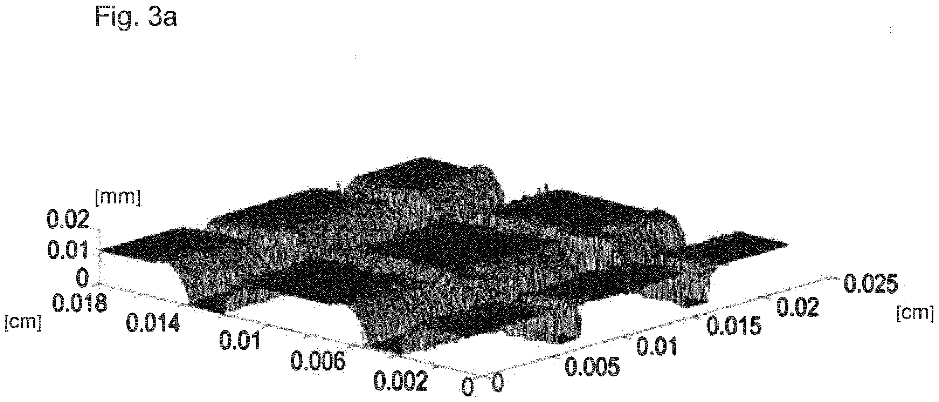

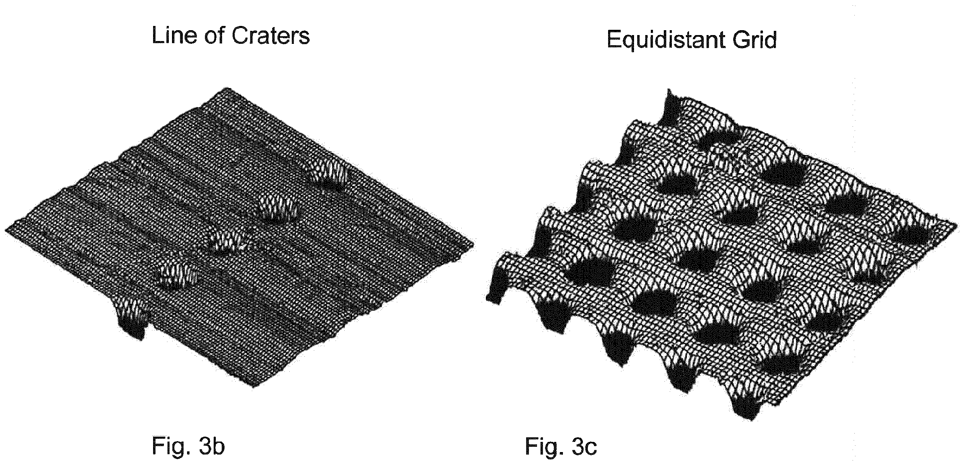

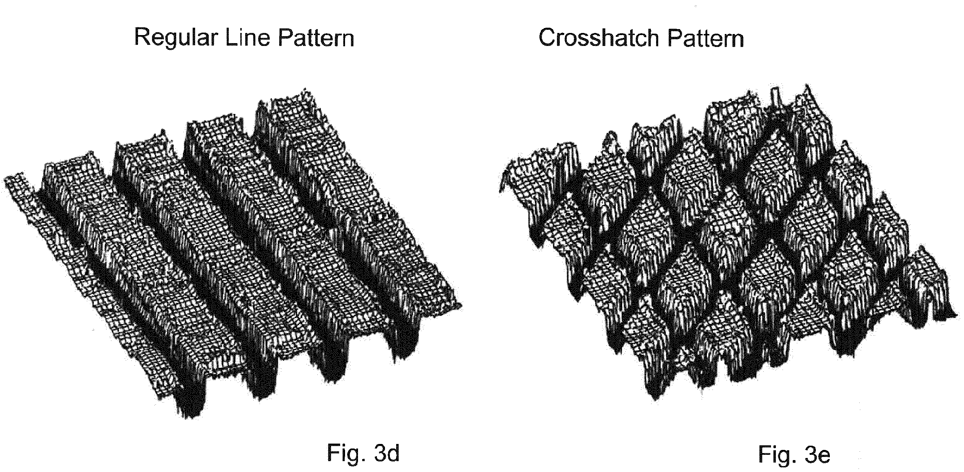

Finally Fig.3 shows of examples of a laser applied texture on steel samples with patterns of individual craters and/or grooves, with respectively grooves at about right angles to each other, a line of craters, an equidistant grid of craters, a regular line pattern and a cross-hatch line pattern.

## Claims

1. Method for finishing a steel strip (11) comprising the texturing of the steel strip wherein a texture is applied to the surface of a moving steel strip, **characterised in that**,
- a single laser beam or a plurality of laser beams is directed at the surface of a moving steel strip, and
- the single laser beam or the plurality of laser beams are position controlled to apply a predetermined texture pattern on the surface of the moving steel strip,
- wherein the texturing is carried out after temper rolling of the steel strip, and
- wherein the temper roll mill is provided with a roll with a roughness Ra (λc = 2.5mm) less than 6 µm.

2. Method according to claim 1, wherein the laser beams are divided in groups each with a single laser beam or a plurality of laser beams, which groups are controlled separately.

3. Method according to claim 2, wherein the groups of laser beams are positioned over the width and/or direction of movement of the steel strip with respect to each other.

4. Method according to claim 2 or 3, wherein the groups of laser beams are controlled such that adjacent parts of the texture are applied with different groups of laser beams wherein the groups have different positions with respect to each other.

5. Method according to claim 2 or 3, wherein two or more groups of laser beams are controlled to form an interference pattern with a power density distribution suitable for texturing of the moving steel strip.

6. Method according to one or more of claims 2-5, wherein the control comprises the control of one or more of the laser beams and the position thereof within one or more of the different groups of laser beams.

7. Method according to one or more of claims 1-6, wherein the control comprises the focussing of laser beams into image points on the surface of the moving steel strip, and/or modulation of the power of the laser beam or beams and/or, shaping of the power density of the laser beam or beams.

8. Method according to one or more of claims 1-7, wherein the control comprises a correction for changes in the z-direction of the moving steel strip.

9. Method according to one or more of claims 1-8, wherein the texturing is carried out after temper rolling and/or levelling of the steel strip.

10. Method according to one or more of claims 1-9, wherein the line speed of the steel strip is in the range of up to and including 15m/s.

11. Method according to one or more of claims 1-10, wherein the laser beam or beams or part of the beams are continuous wave laser beams.

12. Method according to one or more of claims 1-10, wherein the single laser beam or the plurality of laser beams are pulsed laser beams, wherein
- the pulse duration is in the range of 1 fs to 100 ms,
- the electromagnetic radiation of each laser beam has a wave length between 200nm - 11µm, and
- with an energy density of each laser beam in the range of 1nJ/cm² - 100 J/cm², and preferably in the range of 0.1 J/cm² to 10 J/cm².

13. Arrangement for the finishing of steel strip (11), wherein the arrangement comprises a temper roll mill,
**characterised in that** the arrangement comprises at least one laser beam source (6) to generate a single laser beam or a plurality of laser beams to apply a texture to the surface of a moving steel strip, and control means (14, 15) to control the single laser beam or plurality of laser beams to apply a texture on a moving steel strip after the steel strip has been subjected to temper rolling, and wherein the temper roll mill is provided with a roll or rolls with a roughness Ra (λc = 2.5mm) less than 6 µm and preferably less than 2 µm.

14. Arrangement according to claim 13, wherein the control means combine two or more laser beams to form an interference pattern with a power density distribution suitable for texturing of the moving steel strip.

15. Arrangement according to claim 13 or 14, wherein a laser beam splitter (12) is provided for one or more of the laser beam sources to split the laser beam from a laser beam source into a plurality of laser beams.

16. Arrangement according to one or more of claims 13-15, wherein at least one position controlled laser beam deflector (13) is provided in the laser beam path, to deflect the laser beam in one or more directions.

17. Arrangement according to one or more of claims 13-16, wherein a number of laser beam devices are positioned over the width and in the length of the path of the steel strip through the arrangement.

## Patentansprüche

1. Verfahren zur Oberflächenbehandlung eines Stahlbands (11), umfassend das Texturieren des Stahlbands, wobei eine Textur auf die Oberfläche des sich bewegenden Stahlbands aufgebracht wird, **dadurch gekennzeichnet, dass**
- ein einzelner Laserstrahl oder mehrere Laserstrahlen auf die Oberfläche eines sich bewegenden Stahlbands gerichtet werden, und
- der einzelne Laserstrahl oder die mehreren Laserstrahlen hinsichtlich ihrer Position gesteuert werden, um ein vorbestimmtes Texturmuster auf die Oberfläche des sich bewegenden Stahlbands aufzutragen,
- wobei das Texturieren nach dem Nachwalzen des Stahlstreifens ausgeführt wird, und
- wobei das Nachwalzwerk mit einer Walze mit einer Rauheit Ra (λc = 2,5 mm) unter 6 µm bereitgestellt ist.

2. Verfahren nach Anspruch 1, wobei die Laserstrahlen in Gruppen jeweils mit einem einzelnen Laserstrahl oder mehreren Laserstrahlen unterteilt sind, wobei die Gruppen separat gesteuert werden.

3. Verfahren nach Anspruch 2, wobei die Gruppen von Laserstrahlen über der Breite und/oder Bewegungsrichtung des Stahlbands bezüglich einander positioniert sind.

4. Verfahren nach Anspruch 2 oder 3, wobei die Gruppen von Laserstrahlen derart gesteuert werden, dass benachbarte Teile der Textur mit unterschiedlichen Gruppen von Laserstrahlen aufgebracht werden, wobei die Gruppen zueinander unterschiedliche Positionen aufweisen.

5. Verfahren nach Anspruch 2 oder 3, wobei zwei oder mehr Gruppen von Laserstrahlen gesteuert werden, um ein Interferenzmuster mit einer Leistungsdichtenverteilung zu bilden, die für das Texturieren des sich bewegenden Stahlbands geeignet ist.

6. Verfahren nach einem oder mehreren der Ansprüche 2-5, wobei die Steuerung die Steuerung von einem oder mehreren der Laserstrahlen und der Position davon innerhalb einer oder mehreren der verschiedenen Gruppen von Laserstrahlen umfasst.

7. Verfahren nach einem oder mehreren der Ansprüche 1-6, wobei die Steuerung das Fokussieren von Laserstrahlen in Bildpunkte auf der Oberfläche des sich bewegenden Stahlbands und/oder eine Modulation der Leistung des Laserstrahls oder der Laserstrahlen und/oder das Formen der Leistungsdichte des Laserstrahls oder der Laserstrahlen umfasst.

8. Verfahren nach einem oder mehreren der Ansprüche 1-7, wobei die Steuerung eine Korrektur bezüglich Änderungen in der z-Richtung des sich bewegenden Stahlbands umfasst.

9. Verfahren nach einem oder mehreren der Ansprüche 1-8, wobei das Texturieren nach einem Kaltwalzen und/oder Richten des Stahlbands ausgeführt wird.

10. Verfahren nach einem oder mehreren der Ansprüche 1-9, wobei die Bandgeschwindigkeit des Stahlbands im Bereich von bis zu und einschließlich 15 m/s beträgt.

11. Verfahren nach einem oder mehreren der Ansprüche 1-10, wobei der Laserstrahl oder die Laserstrahlen oder ein Teil der Strahlen Dauerstrich-Laserstrahlen sind.

12. Verfahren nach einem oder mehreren der Ansprüche 1-10, wobei der einzelne Laserstrahl oder die mehreren Laserstrahlen gepulste Laserstrahlen sind, wobei
- die Pulsdauer im Bereich von 1 fs bis 100 ms liegt,
- die elektromagnetische Strahlung jedes Laserstrahls eine Wellenlänge zwischen 200 nm - 11 µm aufweist, und
- mit einer Energiedichte jedes Laserstrahls im Bereich von 1 nJ/cm² - 100 J/cm² und bevorzugt im Bereich von 0,1 J/cm² bis 10 J/cm².

13. Anordnung für die Oberflächenbehandlung eines Metallbandes (11), wobei die Anordnung ein Nachwalzwerk umfasst,
**dadurch gekennzeichnet, dass** die Anordnung mindestens eine Laserstrahlenquelle (6) umfasst zum Erzeugen eines einzelnen Laserstrahls oder von mehreren Laserstrahlen zum Aufbringen einer Textur auf die Oberfläche eines sich bewegenden Stahlbandes, und Steuermittel (14, 15) zum Steuern des einzelnen Laserstrahls oder der mehreren Laserstrahlen zum Aufbringen einer Textur auf ein sich bewegendes Stahlband, nachdem das Stahlband einem Nachwalzen unterzogen worden ist,
und wobei das Nachwalzwerk mit einer Walze oder Walzen mit einer Rauheit Ra (λc = 2,5 mm) unter 6 µm und bevorzugt unter 2 µm versehen ist.

14. Anordnung nach Anspruch 13, wobei das Steuermittel zwei oder mehr Laserstrahlen umfasst zum Bilden eines Interferenzmusters mit einer Leistungsdichtenverteilung, die für das Texturieren des sich bewegenden Stahlbandes geeignet ist.

15. Anordnung nach Anspruch 13 oder 14, wobei ein Laserstrahlteiler (12) für eine oder mehrere der Laserstrahlquellen vorgesehen ist zum Aufteilen des Laserstrahls von einer Laserstrahlquelle in mehrere Laserstrahlen.

16. Anordnung nach einem oder mehreren der Ansprüche 13-15, wobei mindestens ein hinsichtlich Position gesteuerter Laserstrahldeflektor (13) in dem Laserstrahlpfad vorgesehen ist, um den Laserstrahl in eine oder mehrere Richtungen abzulenken.

17. Anordnung nach einem oder mehreren der Ansprüche 13-16, wobei eine Anzahl von Laserstrahleinrichtungen über der Breite und in der Länge des Pfads des Stahlbandes durch die Anordnung positioniert ist.

## Revendications

1. Procédé de finissage d'une bande d'acier (11) comprenant la texturation de la bande d'acier, dans lequel une texture est appliquée à la surface d'une bande d'acier en mouvement, **caractérisé en ce que**
- un unique faisceau laser ou une pluralité de faisceaux laser sont dirigés sur la surface d'une bande d'acier en mouvement, et
- la position de l'unique faisceau laser ou de la pluralité de faisceaux laser est contrôlée pour appliquer un motif de texture prédéterminé sur la surface de la bande d'acier en mouvement,
- dans lequel la texturation est réalisée après écrouissage à froid de la bande d'acier, et
- dans lequel le laminoir d'écrouissage à froid est pourvu d'un cylindre avec une rugosité Ra (λc = 2,5 mm) inférieure à 6 µm.

2. Procédé selon la revendication 1, dans lequel les faisceaux laser sont divisés en groupes, chacun avec un unique faisceau laser ou une pluralité de faisceaux laser, lesquels groupes sont contrôlés séparément.

3. Procédé selon la revendication 2, dans lequel les groupes de faisceaux laser sont positionnés sur la largeur et/ou la direction de déplacement de la bande d'acier les uns par rapport aux autres.

4. Procédé selon la revendication 2 ou 3, dans lequel les groupes de faisceaux laser sont contrôlés de telle sorte que des parties adjacentes de la texture sont appliquées avec différents groupes de faisceaux laser, les groupes ayant des positions différentes les uns par rapport aux autres.

5. Procédé selon la revendication 2 ou 3, dans lequel au moins deux groupes de faisceaux laser sont contrôlés pour former un motif d'interférence avec une distribution de densité de puissance appropriée pour la texturation de la bande d'acier en mouvement.

6. Procédé selon une ou plusieurs des revendications 2 à 5, dans lequel le contrôle comprend le contrôle d'un ou plusieurs des faisceaux laser et de la position de ceux-ci à l'intérieur d'un ou plusieurs des différents groupes de faisceaux laser.

7. Procédé selon une ou plusieurs des revendications 1 à 6, dans lequel le contrôle comprend la focalisation de faisceaux laser en points images sur la surface de la bande d'acier en mouvement, et/ou la modulation de la puissance du faisceau ou des faisceaux laser, et/ou la mise en forme de la densité de puissance du faisceau ou des faisceaux laser.

8. Procédé selon une ou plusieurs des revendications 1 à 7, dans lequel le contrôle comprend une correction pour des variations dans la direction z de la bande d'acier en mouvement.

9. Procédé selon une ou plusieurs des revendications 1 à 8, dans lequel la texturation est réalisée après écrouissage à froid et/ou dressage de la bande d'acier.

10. Procédé selon une ou plusieurs des revendications 1 à 9, dans lequel la vitesse de ligne de la bande d'acier se situe dans la gamme allant jusqu'à et y compris 15 m/s.

11. Procédé selon une ou plusieurs des revendications 1 à 10, dans lequel le faisceau ou les faisceaux laser ou une partie des faisceaux sont des faisceaux laser à onde continue.

12. Procédé selon une ou plusieurs des revendications 1 à 10, dans lequel l'unique faisceau laser ou la pluralité de faisceaux laser sont des faisceaux laser pulsés, dans lequel
- la durée d'impulsion se situe dans la gamme de 1 fs à 100 ms,
- le rayonnement électromagnétique de chaque faisceau laser a une longueur d'onde comprise entre 200 nm et 11 µm, et
- avec une densité d'énergie de chaque faisceau laser dans la gamme de 1 nJ/cm²-100 J/cm², et de préférence dans la gamme de 0,1 J/cm² à 10 J/cm².

13. Agencement pour le finissage d'une bande d'acier (11), l'agencement comprenant un laminoir d'écrouissage à froid,
**caractérisé en ce que** l'agencement comprend au moins une source de faisceau laser (6) pour générer un unique faisceau laser ou une pluralité de faisceaux laser pour appliquer une texture à la surface d'une bande d'acier en mouvement, et des moyens de contrôle (14, 15) pour contrôler l'unique faisceau laser ou la pluralité de faisceaux laser pour appliquer une texture sur une bande d'acier en mouvement après que la bande d'acier a été soumise à un écrouissage à froid,
et dans lequel le laminoir d'écrouissage à froid est pourvu d'un cylindre ou de cylindres avec une rugosité Ra (λc = 2,5 mm) inférieure à 6 µm et de préférence inférieure à 2 µm.

14. Agencement selon la revendication 13, dans lequel les moyens de contrôle combinent au moins deux faisceaux laser pour former un motif d'interférence avec une distribution de densité de puissance appropriée pour la texturation de la bande d'acier en mouvement.

15. Agencement selon la revendication 13 ou 14, dans lequel un séparateur de faisceau laser (12) est prévu pour une ou plusieurs des sources de faisceau laser pour séparer le faisceau laser provenant d'une source de faisceau laser en une pluralité de faisceaux laser.

16. Agencement selon une ou plusieurs des revendications 13 à 15, dans lequel au moins un déflecteur de faisceau laser à position contrôlée (13) est disposé sur le chemin du faisceau laser, pour dévier le faisceau laser dans une ou plusieurs directions.

17. Agencement selon une ou plusieurs des revendications 13 à 16, dans lequel un certain nombre de dispositifs de faisceau laser sont positionnés sur la largeur et dans la longueur de la trajectoire de la bande d'acier à travers l'agencement.
